# EUROPÄISCHE PATENTSCHRIFT

(11) **EP 2 990 551 B1**
(45) Veröffentlichungstag und Bekanntmachung des Hinweises auf die Patenterteilung: **08.05.2019**
(21) Anmeldenummer: 14182229.6
(22) Anmeldetag: 26.08.2014
(51) Int. Cl.: B32B 37/06, B32B 37/02, B32B 37/12, B32B 37/20, B32B 38/00, B65H 35/02, B65H 18/00, F16J 15/02, B29D 99/00, E04B 1/68, E06B 1/62

(54) **Verfahren zur Herstellung einer Dichtbandrolle**
Method for manufacturing a sealing tape roll
Procédé de fabrication d'un rouleau de ruban étanche

(43) Veröffentlichungstag der Anmeldung: 02.03.2016
(73) Patentinhaber: ISO-Chemie GmbH, 73431 Aalen (DE)
(72) Erfinder:
(74) Vertreter: Wächter, Jochen

(56) Entgegenhaltungen:
- EP-A1- 2 620 565
- DE-A1- 19 641 415

## Beschreibung

Die vorliegende Erfindung betrifft ein Verfahren zur Herstellung einer Dichtbandrolle.

Von Dichtbandrollen abgewickelte Dichtbänder werden üblicherweise zum Abdichten von Fugen beispielsweise zwischen einem Rahmenprofil eines Fensters oder einer Tür und einer Gebäudewand verwendet, um die Fugen gegen Luftzug und Schlagregen abzudichten. Zusätzlich vorgesehene Folien an einer Seitenfläche des Dichtbands erhöhen zudem die Dampfundurchlässigkeit desselben, siehe z.B. EP 0 072 955 A1 oder EP 1 936 246 A1. Allerdings weisen Folien, die außen an das Dichtband angebracht sind, den Nachteil auf, dass sie beim Transport oder Einbau des Dichtbands beschädigt werden können.

Aus DE 196 41 415 A1 ist eine Dichtbandrolle bekannt, die mindestens eine in radialer Richtung verlaufende Sperrschicht aufweist, die zwischen zwei Schichten des Schaumstoffs und somit im Inneren der Dichtbandrolle angeordnet ist. Dadurch ist die Sperrschicht besser vor Beschädigungen geschützt. Die Sperrschicht besteht dabei aus Klebstoff oder aus einem Laminierungsmaterial. Zur Herstellung eines derartigen Dichtbandes werden großflächige Sperrschichten auf Platten eines offenporigen Schaummaterials durch Laminieren oder Verkleben ausgebildet. Mehrere Lagen an Schaumstoffplatten und Sperrschichten bilden so Laminatblöcke. Diese Laminatblöcke werden orthogonal zu den großflächigen Sperrschichten zu Tafeln getrennt. Die Tafeln werden anschließend derart zu breiten Rollen aufgewickelt, dass die Sperrschichten und das Schaumstoffmaterial auf dem Umfang der Rollen in axialer Richtung aufgereiht sind. Eine derartige breite Rolle wird dann zwischen den einzelnen Sperrschichten in Scheiben zu mehreren Dichtbandrollen getrennt. Dieses Verfahren verlangt viele aufwändige Arbeitsschritte und die Länge der hergestellten Dichtbänder ist durch die Größenbeschränkung von maschinell noch verarbeitbaren Laminatblöcken eingeschränkt.

Das Dokument EP 2 620 565 A1 offenbart ein Verfahren, das die Merkmale des Oberbegriffes des Anspruchs 1 aufweist.

Der vorliegenden Erfindung liegt daher die Aufgabe zugrunde, ein Verfahren zur Herstellung einer Dichtbandrolle mit einer innenliegenden, radial verlaufenden Sperrschicht bereitzustellen, das einfach und zuverlässig ist und mit dem auch Dichtbandrollen großer Längen erzeugt werden können.

Diese Aufgabe wird durch die Merkmale des Anspruchs 1 gelöst.

Das erfindungsgemäße Verfahren zur Herstellung von Dichtbandrollen aus weichem, komprimiertem Schaumstoff mit mindestens einer in radialer Richtung verlaufenden Sperrschicht, die axial zwischen zwei Schichten des Schaumstoffs angeordnet ist, weist folgende Schritte in der angegebenen Reihenfolge auf:
- Bereitstellen einer Schaumstoffbahn aus einem weichen Schaumstoff;
- Einbringen mindestens eines Schnitts in die Schaumstoffbahn in einer Längsrichtung der Schaumstoffbahn zur Bildung von parallel verlaufenden Schaumstoffstreifen;
- Einbringen eines Folienstreifens, eines Klebebandstreifens und/oder eines klebstoffartigen flüssigen Mediums in jeden durch den mindestens einen Schnitt erzeugten Zwischenraum zwischen zwei benachbarten Schaumstoffstreifen;
- Verbinden aller Schaumstoffstreifen zur Herstellung einer Schaumstoff-Sperrschicht-Bahn, bei der sich Schaumstoffstreifen und mindestens eine Sperrschicht abwechseln; und
- (i) Aufwickeln der Schaumstoff-Sperrschicht-Bahn zu einer Dichtbandrolle, oder
- (ii) Aufwickeln der Schaumstoff-Sperrschicht-Bahn zu einer Zwischenrolle und Durchtrennen der Zwischenrolle an einer oder an mehreren Stellen in axialer Richtung, um eine Mehrzahl von Dichtbandrollen zu erzeugen, die weniger breit sind als die Zwischenrolle, oder
- (iii) Einbringen mindestens eines Schnitts in die Schaumstoff-Sperrschicht-Bahn in einer Längsrichtung der Schaumstoff-Sperrschicht-Bahn zur Bildung von Schaumstoff-Sperrschicht-Streifen und Aufwickeln der Schaumstoff-Sperrschicht-Streifen zu einzelnen Dichtbandrollen,
wobei das Verbinden aller Schaumstoffstreifen (12) den Schritt umfasst, die Schaumstreifen (12) aneinander zu drücken.

Auf diese Weise können Dichtbandrollen aus weichem, komprimiertem Schaumstoff mit mindestens einer in radialer Richtung verlaufenden Sperrschicht, die axial zwischen zwei Schichten des Schaumstoffs angeordnet ist, besonders wirtschaftlich und auch in großen Längen hergestellt werden. Zudem ist die Sperrschicht durch die Aufnahme zwischen zwei Schaumstoffstreifen vor äußerer Beschädigung während des Transports und der Montage des Dichtbands geschützt.

Vorzugsweise umfasst der Schritt des Bereitstellens der Schaumstoffbahn die Schritte, eine Ausgangsrolle mit der aufgewickelten Schaumstoffbahn bereitzustellen und die Schaumstoffbahn von der Ausgangsrolle abzuwickeln. Dadurch kann die Schaumstoffbahn besonders platzsparend und in nahezu beliebigen Längen bereitgestellt werden. Es ist daher eine größere Variation der resultierenden Dichtbandlänge möglich.

In einer bevorzugten Ausführungsform ist die Schaumstoffbahn nicht imprägniert und das Verfahren zur Herstellung der Dichtbandrolle weist folgende weitere Schritte auf:
- Tränken der Schaumstoff-Sperrschicht-Bahn mit einem Imprägnat; und
- Trocknen der imprägnierten Schaumstoff-Sperrschicht-Bahn.

Die Sperrschicht haftet in diesem Fall besonders sicher an den zwei angrenzenden, noch nicht imprägnierten Schaumstoffstreifen, wodurch die Verbindung des Klebematerials mit den Schaumstoffstreifen vereinfacht wird.

Vorzugsweise werden vor dem Schritt des Tränkens der Schaumstoff-Sperrschicht-Bahn folgende Schritte durchgeführt:
- Aufwickeln der Schaumstoff-Sperrschicht-Bahn zu einer Vorratsrolle; und
- Abwickeln der Schaumstoff-Sperrschicht-Bahn von der Vorratsrolle.

Auf diese Weise kann die Länge der für das Verfahren benötigten Bearbeitungslinie reduziert werden und es ist möglich, die Vorratsrolle vor der weiteren Bearbeitung beispielsweise auf eine parallele Förderstrecke umzusetzen.

Besonders bevorzugt ist es im Falle der Alternative (ii), wenn die Zwischenrolle an einer oder an mehreren Stellen in axialer Richtung mittels Sägen durchtrennt wird, um die Mehrzahl von Dichtbandrollen zu erzeugen, die weniger breit sind als die finale Rolle. Dadurch können Dichtbandrollen beliebiger Breite und mit einer beliebigen Anzahl an inneren Sperrschichten auf einfache Weise hergestellt werden. Außerdem wird auf diese Weise der Durchsatz der Vorrichtung erhöht.

Das Einbringen jedes Folienstreifens oder Klebebandstreifens in jeden Zwischenraum zwischen zwei benachbarten Schaumstoffstreifen erfolgt vorzugsweise durch Abwickeln des Folienstreifens oder Klebebandstreifens von einer Spule und Umlenken des Folienstreifens oder Klebebandstreifens mittels eines Umlenkelements. Dadurch kann jeder Folienstreifen oder Klebebandstreifen in beliebiger Länge oberhalb, unterhalb oder seitlich der Schaumstoffbahn bereitgestellt werden und dennoch gezielt in Förderrichtung der Schaumstoffbahn in den Zwischenraum eingebracht werden.

Das Einbringen des flüssigen klebstoffartigen Mediums in jeden Zwischenraum erfolgt vorzugsweise mittels einer Düse.

Vorzugsweise umfasst das Verbinden der Schaumstoffstreifen den Schritt, jeden Folienstreifen mit den zwei an den Folienstreifen angrenzenden Schaumstoffstreifen durch Laminierung zu verbinden.

Das Verbinden aller Schaumstoffstreifen kann außerdem den Schritt aufweisen, das flüssige klebstoffartige Medium in jedem Zwischenraum zu verfestigen.

Die Verfestigung des flüssigen klebstoffartigen Mediums erfolgt dabei durch chemische oder physikalische Prozesse.

In vielen bevorzugten Anwendungen umfasst das Verbinden aller Schaumstoffstreifen den Schritt der Wärmeaufbringung.

In allen Anwendungen umfasst das Verbinden aller Schaumstoffstreifen den Schritt, die Schaumstoffstreifen aneinander zu drücken.

Weiterhin ist es bevorzugt, dass das Einbringen jedes Schnitts in die Schaumstoffbahn oder die Schaumstoff-Sperrschicht-Bahn mittels eines Messers oder einer Säge durchgeführt wird. Messer und Sägen eignen sich besonders gut zum Einbringen von Schnitten in solche Bahnen.

In einer bevorzugten Ausführungsform durchdringt jeder Schnitt die Schaumstoffbahn komplett von oben nach unten. Auf diese Weise kann jede aufgebrachte Sperrschicht die ganze Seitenfläche des zugehörigen Schaumstoffstreifens abdecken.

Im Falle eines Durchtrennens der Schaumstoff-Sperrschicht-Bahn gemäß Alternative (iii) ist es notwendig, dass jeder Schnitt die Schaumstoff-Sperrschicht-Bahn von oben nach unten komplett durchdringt.

Weitere Merkmale und Vorteile der vorliegenden Erfindung ergeben sich aus der nachfolgenden Beschreibung unter Bezugnahme auf die Zeichnungen.
- Fig. 1: zeigt den Ablauf nach einem Ausführungsbeispiel des erfindungsgemäßen Verfahrens in einem ersten Abschnitt einer für das Verfahren geeigneten Vorrichtung in schematischer Perspektivansicht;
- Fig. 2: zeigt eine schematische Detailansicht der Verbindungseinheit aus Fig. 1;
- Fig. 3: zeigt den Ablauf nach dem Ausführungsbeispiel des erfindungsgemäßen Verfahrens aus Fig. 1 in einem zweiten Abschnitt einer für das Verfahren geeigneten Vorrichtung in schematischer Perspektivansicht;
- Fig. 4: zeigt den Schritt des Durchtrennens der Zwischenrolle gemäß einer Alternative des erfindungsgemäßen Verfahrens in schematischer Perspektivansicht;
- Fig. 5: zeigt den Ablauf nach einem anderen Ausführungsbeispiel des erfindungsgemäßen Verfahrens in einem ersten Abschnitt einer für das Verfahren geeigneten Vorrichtung in schematischer Perspektivansicht;
- Fig. 6: zeigt die finalen Schritte eines alternativen Ausführungsbeispiels des erfindungsgemäßen Verfahrens in schematischer Perspektivansicht; und
- Fig. 7: zeigt eine Einbausituation eines nach dem erfindungsgemäßen Verfahren hergestellten Dichtbands in einer schematischen Querschnittsansicht.

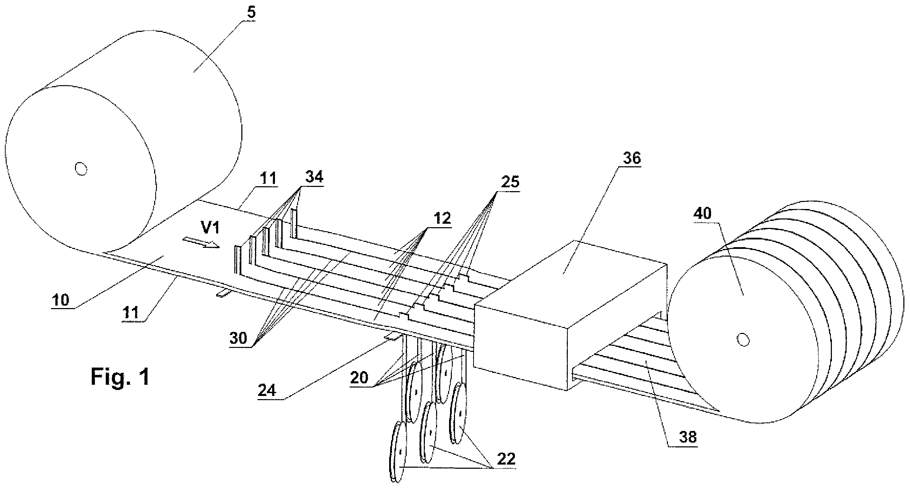

In Fig. 1 sind die ersten Schritte eines Ausführungsbeispiels des erfindungsgemäßen Verfahrens dargestellt. Auf einer Ausgangsrolle 5 wird der weiche Schaumstoff in großen Längen von bis zu 200 m, vorzugsweise zwischen 5 und 100 m, mehr bevorzugt zwischen 10 und 60 m, bereitgestellt. Als Schaumstoffe können alle bekannten offenzelligen, gemischtzelligen oder geschlossenzelligen Weichschaumstoffe aus z.B. Polyurethan, Polyethylen, Polyvinylchlorid oder Polypropylen verwendet werden, die nach Kompression eine Rückstellung vollziehen.

Durch die Bereitstellung auf der Ausgangsrolle 5 kann die Schaumstoffbahn 10 besonders gut transportiert und verarbeitet werden. In der Regel befindet sich die Schaumstoffbahn 10 auf der Ausgangsrolle 5 in einem nicht oder nur geringfügig komprimierten Zustand. Es ist auch möglich, dass sich die Schaumstoffbahn 10 auf der Ausgangsrolle 5 in einem komprimierten Zustand befindet, allerdings muss dann nach dem Abwickeln von der Ausgangsrolle 5 eine rechtzeitige Rückstellung des Schaumstoffmaterials im Prozessablauf sichergestellt sein. Es ist auch denkbar, einzelne Schaumstoffbahnen 10 bereitzustellen, die nicht zu einer Ausgangsrolle 5 aufgewickelt sind, wodurch jedoch ein größerer Bereitstellungsraum benötigt wird. Die Breite der Schaumstoffbahn 10 liegt üblicherweise zwischen 1 cm und 5 m, vorzugsweise zwischen 1,0 m und 1,5 m. Die Höhe der Schaumstoffbahn 10 beträgt im entspannten Zustand üblicherweise zwischen 5 mm und 30 cm, vorzugsweise zwischen 1 und 12 cm.

Nach dem Abwickeln von der Ausgangsrolle 5 wird die Schaumstoffbahn 10 entlang einer Förderrichtung bewegt, die durch den Pfeil V1 gekennzeichnet ist. Mittels mindestens eines Messers 34, vorzugsweise mehrerer paralleler Messer 34, wird mindestens ein vorzugsweise durchgängiger Schnitt 30, vorzugsweise mehrere parallele durchgängige Schnitte 30, in die Schaumstoffbahn 10 in einer Längsrichtung der Schaumstoffbahn 10 eingebracht, bevorzugt parallel zu den Längskanten 11 der Schaumstoffbahn 10. Die Längskanten 11 sind dabei die Kanten der Schaumstoffbahn 10, die parallel zur Förderrichtung V1 und orthogonal zur axialen Richtung der Ausgangsrolle 5 verlaufen. Zum Einbringen des mindestens einen Schnitts 30 in die Schaumstoffbahn 10 können neben Messern 34 alle anderen dem Fachmann bekannten Verfahren zum Durchtrennen von Schaumstoffbahnen 10 verwendet werden, wie z.B. Durchtrennen mit Sägen, beheizten Drähten, Laserschneiden oder Wasserstrahlschneiden. Die Schnitte 30 können auch nur über einen Teil der Höhe der Schaumstoffbahn 10 erfolgen, sodass die Schaumstoffstreifen 12 noch über einen Schaumstoffsteg miteinander verbunden sind.

Jeder durchgängige Schnitt 30 erzeugt einen Zwischenraum zwischen zwei benachbarten Schaumstoffstreifen 12. Die durch den mindestens einen Schnitt 30 erzeugten Schaumstoffstreifen 12 können eine unterschiedliche Breite aufweisen, vorzugsweise sind sie aber gleich breit. Die Breite eines Schaumstoffstreifens 12 liegt vorzugsweise zwischen 5 und 150 mm, mehr bevorzugt zwischen 10 und 80 mm.

In jeden Zwischenraum wird in einem weiteren Schritt jeweils ein Folienstreifen 20 oder ein Klebebandstreifen eingebracht. Jeder Folienstreifen 20 oder Klebebandstreifen ist dazu vorzugsweise auf einer Spule 22 oder Rolle bereitgestellt und wird bevorzugt über mindestens ein Umlenkelement 24 in den Zwischenraum eingebracht. Jede Spule 22 kann daher in beliebiger Position zur Schaumstoffbahn 10 angeordnet sein, wobei jeder Folienstreifen 20 oder Klebebandstreifen stets durch das entsprechende Umlenkelement 24 umgelenkt wird und im Wesentlichen in Förderrichtung V1 in den entsprechenden Zwischenraum eingebracht wird. Als Umlenkelemente 24 können beispielsweise Umlenkschultern oder Umlenkrollen verwendet werden. Es ist auch denkbar, eine Folienbahn oder Klebebandbahn (vorzugsweise in Rollenform) bereitzustellen und diese längs in einzelne Folienstreifen 20 oder Klebebandstreifen zu zerschneiden, bevor diese in die Zwischenräume zwischen den Schaumstoffstreifen 12 eingebracht werden.

Klebebandstreifen werden in der Regel mit mindestens einer Abziehfolie bereitgestellt, die vor dem Einfügen in den Zwischenraum vom Klebebandstreifen abgelöst wird.

Da die einzelnen Schaumstoffstreifen 12 eng aneinander anliegen, ist es für die Einfügung des Folienstreifens 20 oder Klebebandstreifens vorteilhaft, wenn jeder Zwischenraum zuvor durch ein Spreizelement 25 verbreitert wird. Als Spreizelemente 25 können beispielsweise sich in Förderrichtung V1 verbreiternde, schiffsbugförmige Nasen verwendet werden. Im dargestellten Ausführungsbeispiel sind die Umlenkelemente 24 einstückig mit den Spreizelementen 25 ausgebildet, sie können aber auch als getrennte Bauteile vorliegen.

Es ist auch denkbar, jede Spule 22 derart anzuordnen, dass der Folienstreifen 20 oder Klebebandstreifen ohne Umlenkung in den entsprechenden Zwischenraum eingebracht werden kann. Zudem ist es möglich, die Folienstreifen 20 oder Klebebandstreifen in jeder anderen geeigneten Form, beispielsweise als Streifen vorbestimmter Länge, bereitzustellen und einzubringen.

Nach dem Einbringen jedes Folienstreifens 20 oder Klebebandstreifens in den Zwischenraum zwischen zwei benachbarten Schaumstoffstreifen 12 erfolgt die Verbindung aller Folienstreifen 20 oder Klebebandstreifen (vorzugsweise bestehend aus Haftkleber) mit den zwei angrenzenden Schaumstoffstreifen 12, vorzugsweise im Bereich einer Verbindungseinheit 36. Der Verbindungsschritt umfasst in der Regel allgemein einen Schritt, die Schaumstoffstreifen 12 aneinander zu drücken, und gegebenenfalls der Wärmeaufbringung.

Bei Folienstreifen 20 erfolgt die Verbindung mit den Schaumstoffstreifen 12 in der Verbindungseinheit 36 vorzugsweise durch Laminierung. Der Folienstreifen 20 kann auch selbst einen oder mehrere Klebebandstreifen oder eine feste Schicht eines Schmelzklebers umfassen.

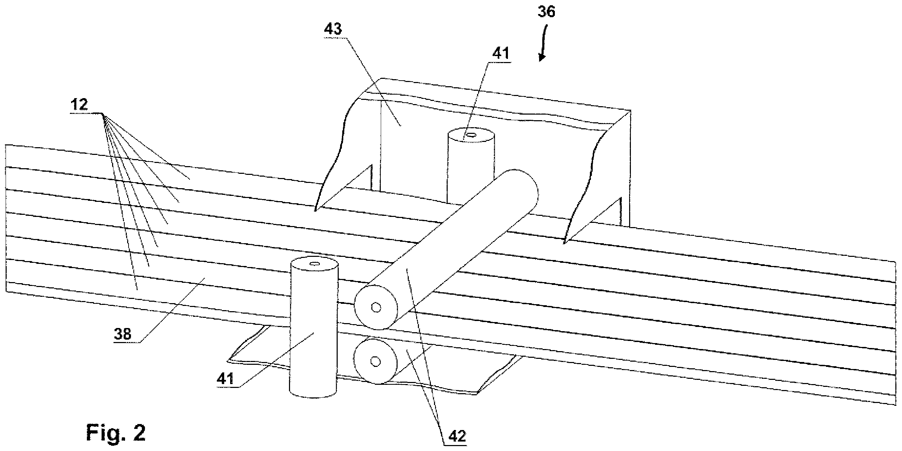

Eine Detailansicht einer möglichen Verbindungseinheit 36 ist in Fig. 2 gezeigt. Die Verbindungseinheit 36 umfasst ein Paar von Druckwalzen 41, die an beiden Schmalseiten der Schaumstoff-Sperrschicht-Bahn 38 angeordnet sind und die einzelnen Schaumstoffstreifen 12 aneinander drücken. Die Druckwalzen 41 sind vorzugsweise jeweils drehbar um eine vertikale Achse gelagert, wobei die Drehrichtung der beiden Druckwalzen 41 gegensinnig ist. Vorzugsweise ist in der Verbindungseinheit 36 außerdem ein Paar von Zugwalzen 42 angeordnet, die sich über die Breite der Schaumstoff-Sperrschicht-Bahn 38 erstrecken und die Schaumstoff-Sperrschicht-Bahn 38 in einem Walzenspalt aufnehmen. Die beiden Zugwalzen 42 sind jeweils um eine horizontale Achse gegensinnig angetrieben und ziehen die Schaumstoff-Sperrschicht-Bahn 38 somit durch die Verbindungseinheit 36. Derartige Paare von Zugwalzen 42 können auch an anderen Stellen des Herstellungsprozesses verwendet werden. In der Verbindungseinheit 36 können die Zugwalzen 42 auch stromauf der Druckwalzen 41 angeordnet sein.

Vorzugsweise umfasst die Verbindungseinheit 36 auch eine Heizvorrichtung 43, die in Fig. 2 lediglich angedeutet ist. Die Heizvorrichtung 43 kann vorzugsweise ein Gehäuse umfassen, das die Schaumstoff-Sperrschicht-Bahn 38 umgibt. Die Heizvorrichtung 43 kann auf alle möglichen Arten der Erwärmung ausgerichtet sein. Die Heizvorrichtung 43 kann in Kombination mit den Druckwalzen 41 verwendet werden. Ebenso ist es möglich, lediglich die Heizvorrichtung 43 oder lediglich die Druckwalzen 41 in der Verbindungseinheit 36 vorzusehen. Die Heizvorrichtung 43 kann auch darauf ausgerichtet sein, nur obere und untere Randbereiche der Schaumstoff-Sperrschicht-Bahn 38 fest miteinander zu verbinden, indem die Temperatur und/oder Zeitdauer der Erhitzung entsprechend eingestellt werden.

Auf diese Weise wird eine Schaumstoff-Sperrschicht-Bahn 38 geformt, wobei die Folienstreifen 20 oder Klebestreifen nunmehr die Funktion der Sperrschichten übernehmen. Die Funktion jeder Sperrschicht liegt vorzugsweise in einer Reduzierung oder Verhinderung des Durchtritts von Luft und/oder Wasserdampf. Dies gilt auch für alle folgenden Ausführungsbeispiele.

Hinter der Verbindungseinheit 36 wird diese Schaumstoff-Sperrschicht-Bahn 38 in der dargestellten Ausführungsform auf eine Vorratsrolle 40 aufgewickelt. Es ist aber auch möglich, die Schaumstoff-Sperrschicht-Bahn 38 kontinuierlich den weiteren Bearbeitungsschritten zuzuführen oder die Schaumstoff-Sperrschicht-Bahn 38 zwischen anderen beliebigen Schritten zu einer Vorratsrolle 40 aufzurollen und vor dem nachfolgenden Schritt von dieser abzuwickeln. Dadurch kann die Anzahl der in einer Produktionslinie aufeinanderfolgenden Schritte variiert und somit die Länge der einzelnen Teilabschnitte der Produktionslinie entsprechend den vorherrschenden Platzverhältnissen angepasst werden. Auf der Vorratsrolle 40 liegt die Schaumstoff-Sperrschicht-Bahn 38 in der Regel wieder nicht oder nur geringfügig komprimiert vor.

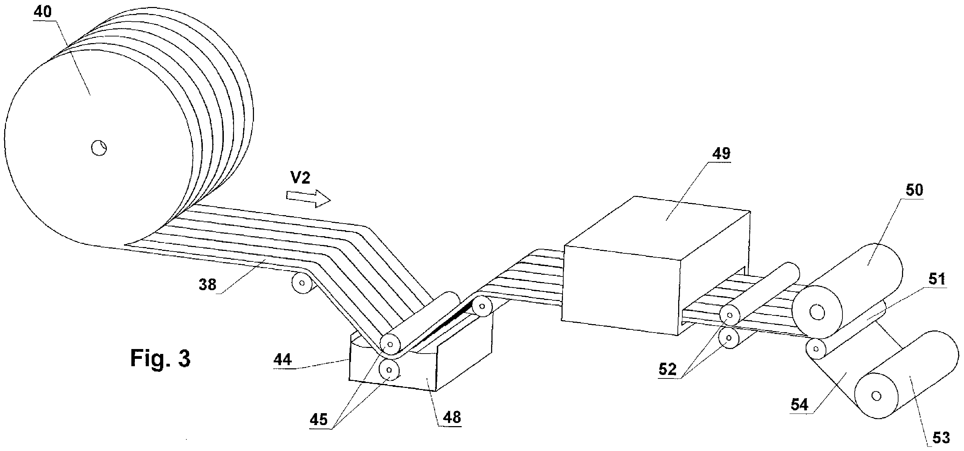

Wenn die bereitgestellte Schaumstoffbahn 10 bereits vorher imprägniert ist oder das Dichtband unimprägniert bleiben soll, kann anstelle der Vorratsrolle 40 aus Fig. 1 auch bereits die Zwischenrolle 50 aus Fig. 2 oder sogar direkt das Endprodukt, die Dichtbandrolle 1, erzeugt werden (jeweils vorzugsweise unter Verwendung der in Fig. 3 rechts dargestellten Kompressionswalzen 51).

Falls dies nicht der Fall ist, sind in Fig. 3 die weiteren Schritte des Ausführungsbeispiels des erfindungsgemäßen Verfahrens dargestellt. Hierzu wird die zuvor auf die Vorratsrolle 40 aufgewickelte Schaumstoff-Sperrschicht-Bahn 38 zunächst wieder abgewickelt. Bei dem in Fig. 3 dargestellten Ausführungsbeispiel des erfindungsgemäßen Verfahrens wird die Schaumstoff-Sperrschicht-Bahn 38 entlang einer zweiten Förderrichtung V2, die je nach Anordnung der Teilstrecken der Produktionslinie identisch oder verschieden zu V1 sein kann, in einem nächsten Schritt durch eine Imprägniereinheit 44 geführt. Zwei Walzen 45 führen die Schaumstoff-Sperrschicht-Bahn 38 dabei in ein Bad eines geeigneten Imprägnats 48 und der Schaumstoff saugt sich mit dem Imprägnat voll. Übliche Imprägnate und Verfahren zum Imprägnieren von Schaumstoffen sind dem Fachmann bekannt. Vorzugsweise wird die Schaumstoff-Sperrschicht-Bahn 38 zwischen den Walzen 45 komprimiert, um durch die anschließende Rückstellung des Schaumstoffs die Aufnahme des Imprägnats 48 zu fördern. Nach dem Imprägnieren in der Imprägniereinheit 44 erfolgt das Trocknen der imprägnierten Schaumstoff-Sperrschicht-Bahn 38 in einer Trockeneinheit 49. In dieser wird die imprägnierte Schaumstoff-Sperrschicht-Bahn 38 auf bekannte Weise, z.B. durch Heizgebläse oder Heizstrahler, getrocknet. Anschließend wird die Schaumstoff-Sperrschicht-Bahn 38, vorzugsweise unter Verwendung von Kompressionswalzen 51, 52, zu einer Zwischenrolle 50 aufgerollt. Dabei kann es ausreichen, wenn nur eine Kompressionswalze 51 direkt am Übergang zur Zwischenrolle 50 verwendet wird, oder es kann ein Paar von Kompressionswalzen 52 vorher zur Komprimierung der Schaumstoff-Sperrschicht-Bahn 38 verwendet werden. Im dargestellten Beispielsfall werden beide Optionen in Kombination angewendet. Auf der Zwischenrolle 50 liegt die Schaumstoff-Sperrschicht-Bahn 38 im stark komprimierten Zustand vor.

Die Trockeneinheit 49 nach der Imprägniereinheit 44 kann in einer besonderen Ausführungsform auch als Heizvorrichtung zum festen Verbinden aller Folienstreifen 20 oder Klebebandstreifen mit den zwei angrenzenden Schaumstoffstreifen 12 fungieren, wenn zuvor noch keine Heizvorrichtung 43 verwendet wurde. Auf diese Weise könnte ein Heizvorgang entfallen.

Auf die Schaumstoff-Sperrschicht-Bahn 38 wird außerdem vorzugsweise ein einseitig mit einer Abziehfolie kaschiertes doppelseitiges Klebeband 54 aufgebracht. Das Klebeband 54 ist wiederum auf einer Spule 53 oder Rolle gelagert und wird von dieser abgezogen. Vorzugsweise erfolgt die Aufbringung des Klebebands 54 auf die Schaumstoff-Sperrschicht-Bahn 38 gleichzeitig mit der Aufwicklung der Schaumstoff-Sperrschicht-Bahn 38 zur Zwischenrolle 50, wobei die Kompressionswalze 51 den Druck zur Verbindung von Klebeband 54 und Schaumstoff-Sperrschicht-Bahn 38 erzeugt.

Das Imprägnieren des Schaumstoffs kann auch an anderen Positionen erfolgen, wie z.B. vor dem Einbringen des mindestens einen durchgängigen Schnitts 30 in die Schaumstoffbahn 10 oder unmittelbar nach dem Einbringen des mindestens einen durchgängigen Schnitts 30 in die Schaumstoffbahn 10. Ebenso kann das Imprägnieren des Schaumstoffs komplett entfallen oder bereits vor dem Bereitstellen der Schaumstoffbahn 10 geschehen sein. Vorzugsweise findet das Imprägnieren des Schaumstoffs jedoch nach dem Einbringen jedes Folienstreifens 20 oder Klebebandstreifens in den Zwischenraum zwischen zwei benachbarten Schaumstoffstreifen 12 statt, da jeder Folienstreifen 20 oder Klebebandstreifen besser an einem nicht imprägnierten Schaumstoff haftet und sich folglich besser mit diesem verbinden lässt.

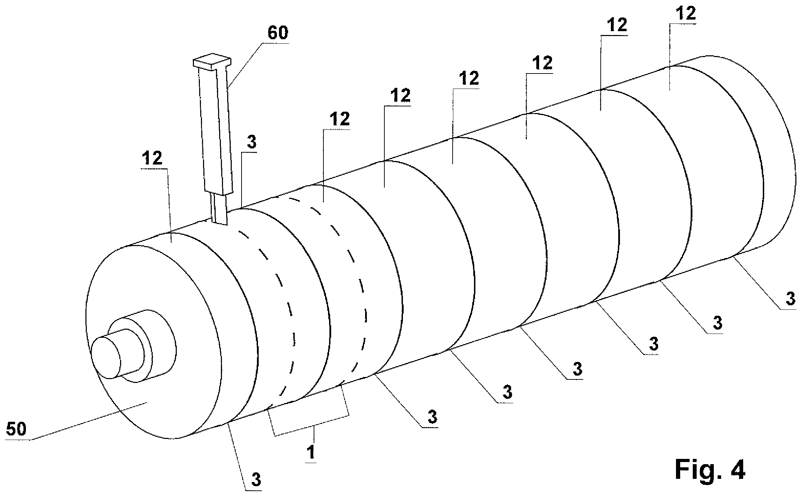

Wie in Fig. 4 dargestellt, wird die Zwischenrolle 50 gemäß dem bevorzugten Ausführungsbeispiel des erfindungsgemäßen Verfahrens an einer oder an mehreren Stellen in axialer Richtung durchtrennt, um eine Mehrzahl von Dichtbandrollen 1 zu erzeugen, die weniger breit sind als die Zwischenrolle 50. Vorzugsweise wird das Durchtrennen der Zwischenrolle 50 mittels einer oder mehrerer paralleler Sägen 60 durchgeführt. In Fig. 4 ist nur eine Säge 60 dargestellt, und ein weiterer paralleler Schnitt zum Durchtrennen der Zwischenrolle 50 ist gestrichelt angedeutet. Auch hier können andere geeignete Verfahren zum Durchtrennen verwendet werden (z.B. Messer, beheizte Drähte, Laserschneiden, Wasserstrahlschneiden).

Die Zwischenrolle 50 wird derart in Dichtbandrollen 1 geschnitten, dass sich Schaumstoffstreifen 12 und die mindestens eine Sperrschicht 3 in axialer Richtung der Dichtbandrolle 1 abwechseln. Dabei ist in einer Dichtbandrolle 1 jede radial verlaufende Sperrschicht 3 zwischen zwei Schaumstoffstreifen 12 aufgenommen, wodurch das Dichtband 2 eine erhöhte Abdichtung gegen Luftzug und/oder Dampfdiffusion aufweist und jede Sperrschicht 3 gleichzeitig vor äußerer Beschädigung geschützt ist. Aus Gründen der Übersichtlichkeit ist das vorzugsweise vorhandene, mit einer Abziehfolie kaschierte doppelseitige Klebeband 54 aus Fig. 3 hier nicht dargestellt.

Im Ausführungsbeispiel der Fig. 4 werden Dichtbandrollen 1 mit genau einer Sperrschicht 3 hergestellt. Ebenso können Dichtbandrollen 1 mit mehreren inneren Sperrschichten 3 hergestellt werden. In diesem Fall können die Sperrschichten 3 eines Dichtbands 2 unterschiedliche Dampfdiffusionsdichtigkeiten aufweisen. Ebenso können für die Bildung der Sperrschichten 3 Folienstreifen 20 (oder Klebematerialien) verwendet werden, deren Dampfdiffusionsdichtigkeit sich variabel an die Umgebungsbedingungen anpasst. Der Schritt des Schneidens der Zwischenrolle 50 in einzelne Dichtbandrollen 1 kann auch entfallen, wenn die gesamte Zwischenrolle 50 bereits als Dichtbandrolle 1 verwendet wird. In diesem Fall kann es zusätzlich sinnvoll sein, im Sinne einer glatteren Außenfläche der Dichtbandrolle 1 dennoch die Randbereiche der Zwischenrolle 50 abzutrennen.

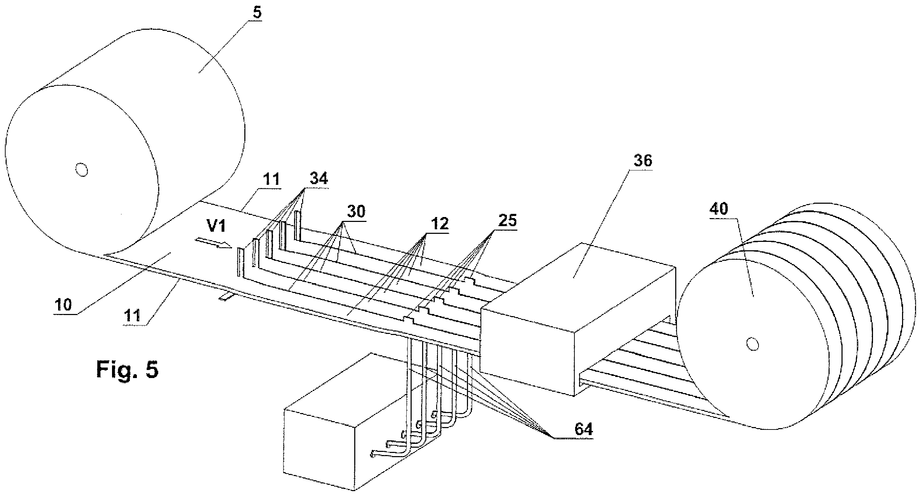

In Fig. 5 ist eine alternative Möglichkeit der Einbringung einer Sperrschicht 3 gezeigt. Das Verfahren unterscheidet sich von dem Verfahren aus Fig. 1 nur darin, dass anstelle der Folienstreifen 20 oder Klebebandstreifen ein klebstoffartiges flüssiges Medium mittels Düsen 64 (z.B. Schmelzdüse, Flachdüse, Mischdüse) oder über Walzenauftrag (Transferwalze) in die vorzugsweise aufgespreizten Zwischenräume zwischen den Schaumstoffstreifen 12 eingebracht wird. Je nach Klebstoff kann anschließend, vorzugsweise in der Verbindungseinheit 36, eine Verbindung der Schaumstoffstreifen 12 stattfinden, wobei der Klebstoff in der Regel verfestigt wird. Es kommen grundsätzlich chemische und physikalische Arten der Verfestigung in Frage. Auch hier wird die Verbindung der Schaumstoffstreifen 12 in der Regel wieder einen Schritt, die Schaumstoffstreifen 12 aneinander zu drücken, und gegebenenfalls der Wärmeaufbringung umfassen. Es ist auch möglich, auf einen Folienstreifen 20 gemäß Fig. 1 einen Sprühkleber aufzubringen.

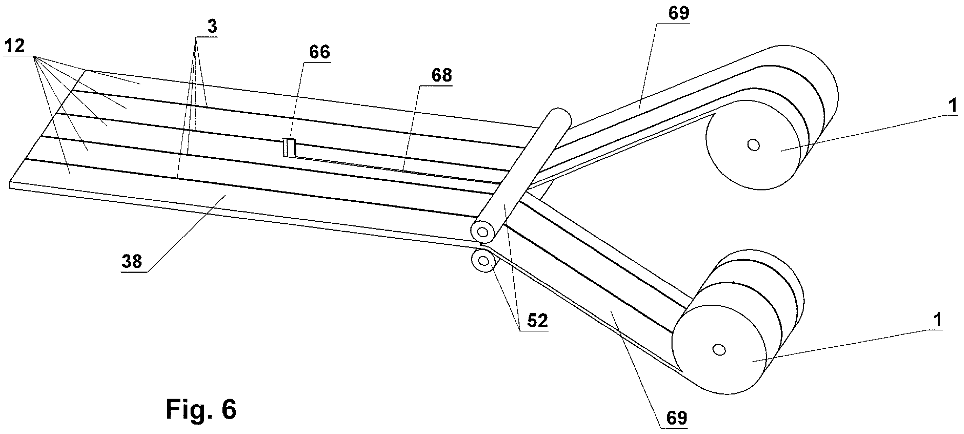

Fig. 6 zeigt eine weitere Möglichkeit der finalen Bearbeitung der Schaumstoff-Sperrschicht-Bahn 38 zur Herstellung von Dichtbandrollen 1. Neben der in Fig. 3 rechts und Fig. 4 dargestellten Variante kann die Schaumstoff-Sperrschicht-Bahn 38 auch mittels eines oder mehrerer Messer 66 oder Sägen im Bereich mindestens eines Schaumstoffstreifens 12 in Längsrichtung durchtrennt werden. Hierdurch wird mindestens ein Schnitt 68 in die Schaumstoff-Sperrschicht-Bahn 38 eingefügt, wodurch mindestens zwei Schaumstoff-Sperrschicht-Streifen 69 erzeugt werden. Jeder Schaumstoff-Sperrschicht-Streifen 69 kann dann anschließend zu einer fertigen Dichtbandrolle 1 aufgewickelt werden. Vorzugsweise erfolgt zudem die Aufbringung eines mit einer Abziehfolie versehenen doppelseitigen Klebebands 54 wie in Fig. 3 (in Fig. 6 nicht dargestellt). Auf diese Weise kann der in Fig. 4 dargestellte Schritt des Zerteilens einer Zwischenrolle 50 entfallen. Vorzugsweise können auch hier Kompressionswalzen 52 für eine Vorkomprimierung der einzelnen Schaumstoff-Sperrschicht-Streifen 69 verwendet werden.

Neben den Zugkräften durch stromabwärtiges Aufwickeln werden alle Schaumstoffbahnen, Schaumstoff-Sperrschicht-Bahnen oder Schaumstoff-Sperrschicht-Streifen vorzugsweise durch Walzen, besonders bevorzugt durch Paare gegenläufig bewegter Walzen, vorwärtsbewegt. Auch Laufbänder können verwendet werden. Derartige Fortbewegungsmittel können auch für die Folienstreifen oder Klebebandstreifen verwendet werden.

Die in den Ausführungsbeispielen genannten Heizvorrichtungen sind üblicherweise als Warmluftgebläse ausgestaltet. Es kommt aber auch Strahlungserhitzung in Frage, beispielsweise mittels einer Infrarotheizung oder Mikrowellenheizung.

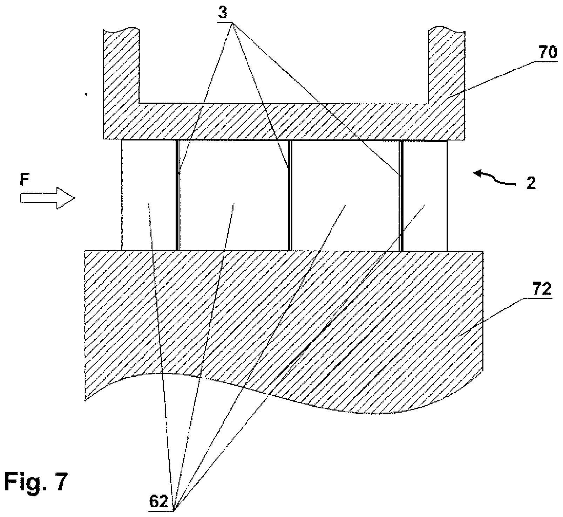

Fig. 7 zeigt eine Einbausituation eines Dichtbands 2, das nach dem erfindungsgemäßen Verfahren hergestellt wurde. Für den Einbau ist das Dichtband 2 zunächst von der Dichtbandrolle 1 abzuwickeln und in Streifen beliebiger Länge zu schneiden. Die Höhe und Länge des Dichtbands 2 auf der Dichtbandrolle entspricht der Höhe und Länge der ursprünglichen Schaumstoffbahn 10. Die Breite des Dichtbands 2 liegt üblicherweise zwischen 10 mm und 20 cm, vorzugsweise zwischen 2 cm und 12 cm.

Üblicherweise wird die Länge der abgeschnittenen Dichtbandstücke an die Außenkonturen eines abzudichtenden Fensterrahmens oder eines Türrahmens angepasst. Das Dichtband 2 wird dann z.B. mittels des doppelseitigen Klebebandes 54 oder anderer Klebeschichten, Klebebändern oder anderen geeigneten Mitteln am Fensterrahmen 70 oder Türrahmen befestigt.

In der in Fig. 7 abgebildeten Einbausituation ist das Dichtband 2 zwischen einem Fensterrahmen 70 und einem Mauerwerk 72 aufgenommen, um die dazwischenliegende Fuge abzudichten. Das abgebildete Dichtband 2 umfasst in diesem Fall drei Sperrschichten 3 zwischen vier Schaumstoffschichten 62, wobei die beiden äußeren Schaumstoffschichten 62 nur halb so breit sind wie die beiden inneren Schaumstoffschichten 62. Die inneren Schaumstoffschichten 62 entsprechen dabei den Schaumstoffstreifen 12 nach dem Schritt des Einbringens des mindestens einen Schnitts 30 aus Fig. 1.

Wie beschrieben, ist jede beliebige Anzahl an Sperrschichten 3 im Dichtband 2 möglich, ebenso sind verschiedene Breiten der einzelnen Schaumstoffschichten 62 denkbar, auch verschieden breite Schaumstoffschichten 62 innerhalb desselben Dichtbands 2.

Das Dichtband 2 ist so zu verbauen, dass jede Sperrschicht 3 vom Fensterrahmen 70 zum Mauerwerk 72 und somit im Wesentlichen orthogonal zu einer Funktionsrichtung F des Dichtbands 2 verläuft. Die Funktionsrichtung F erstreckt sich dabei parallel zu den die abzudichtende Fuge bildenden Flächen des Fensterrahmens 70 und des Mauerwerks 72 von einer Raumaußenseite (in Fig. 4 links) zu einer Rauminnenseite (in Fig. 4 rechts). Auf diese Weise kann eine zuverlässige Abdichtung gegen Luftzug und/oder Dampfdiffusion gewährleistet werden.

Als "Sperrschicht" 3 wird im Rahmen dieser Anmeldung eine Schicht bezeichnet, die geeignet ist, den Durchtritt von Luft oder die Dampfdiffusion durch das Dichtband 2 zu reduzieren. Eine vollständige Sperrung gegenüber einem Durchtritt von Luft oder gegenüber Dampfdiffusion ist möglich, aber nicht zwangsläufig notwendig. Es kann zweckmäßig sein, wenn wenigstens eine Sperrschicht 3 feuchtevariabel ist derart, dass sie bei hoher Luftfeuchtigkeit diffusionsdichter ist als bei niedrigerer Luftfeuchtigkeit oder umgekehrt.

Hinsichtlich der für die Sperrschicht einsetzbaren Materialien wird beispielsweise auf DE 10 2010 055 788 A1 oder auf EP 2 733 271 A1 verwiesen, deren Inhalt von dieser Anmeldung mit umfasst sein soll.

Besondere Bedeutung hat neben den Eigenschaften der Verringerung oder Verhinderung der Dampfdiffusion, dass jede Sperrschicht 3 dauerelastisch ist, so dass sie auch nach Lagerung der Dichtbandrolle 1 im komprimierten Zustand bei der Rückstellung des Dichtbands 2 dauerhaft elastisch bleibt und im Einbauzustand des Dichtbandes 2 in einer Fuge jederzeit dicht an den Fugenflanken anliegt.

## Patentansprüche

1. Verfahren zur Herstellung von Dichtbandrollen (1) aus weichem, komprimiertem Schaumstoff mit mindestens einer in radialer Richtung verlaufenden Sperrschicht (3), die axial zwischen zwei Schichten (12) des Schaumstoffs angeordnet ist, mit folgenden Schritten in der angegebenen Reihenfolge:
- Bereitstellen einer Schaumstoffbahn (10) aus einem weichen Schaumstoff;
- Einbringen mindestens eines Schnitts (30) in die Schaumstoffbahn (10) in einer Längsrichtung der Schaumstoffbahn (10) zur Bildung von parallel verlaufenden Schaumstoffstreifen (12);
- Einbringen eines Folienstreifens (20), eines Klebebandstreifens und/oder eines klebstoffartigen flüssigen Mediums in jeden durch den mindestens einen Schnitt (30) erzeugten Zwischenraum zwischen zwei benachbarten Schaumstoffstreifen (12); und
- Verbinden aller Schaumstoffstreifen (12) zur Herstellung einer Schaumstoff-Sperrschicht-Bahn (38), bei der sich Schaumstoffstreifen (12) und mindestens eine Sperrschicht (3), die aus dem Folienstreifen (20), dem Klebebandstreifen und/oder dem klebstoffartigen flüssigen Medium hervorgegangen ist, abwechseln; **dadurch gekennzeichnet, dass** einer der folgenden Schritte den vorher angegebenen Schritten folgt:
- (i) Aufwickeln der Schaumstoff-Sperrschicht-Bahn (38) zu einer Dichtbandrolle (1), oder
- (ii) Aufwickeln der Schaumstoff-Sperrschicht-Bahn (38) zu einer Zwischenrolle (50) und Durchtrennen der Zwischenrolle (50) an einer oder an mehreren Stellen in axialer Richtung, um eine Mehrzahl von Dichtbandrollen (1) zu erzeugen, die weniger breit sind als die Zwischenrolle (50), oder
- (iii) Einbringen mindestens eines Schnitts (68) in die Schaumstoff-Sperrschicht-Bahn (38) in einer Längsrichtung der Schaumstoff-Sperrschicht-Bahn (38) zur Bildung von Schaumstoff-Sperrschicht-Streifen (69) und Aufwickeln der Schaumstoff-Sperrschicht-Streifen (69) zu einzelnen Dichtbandrollen (1);
und dass
das Verbinden aller Schaumstoffstreifen (12) den Schritt umfasst, die Schaumstoffstreifen (12) aneinander zu drücken.

2. Verfahren nach Anspruch 1, **dadurch gekennzeichnet, dass** der Schritt des Bereitstellens der Schaumstoffbahn (10) die Schritte umfasst, eine Ausgangsrolle (5) mit der aufgewickelten Schaumstoffbahn (10) bereitzustellen und die Schaumstoffbahn (10) von der Ausgangsrolle (5) abzuwickeln.

3. Verfahren nach Anspruch 1 oder 2, **dadurch gekennzeichnet, dass** die Schaumstoffbahn (10) nicht imprägniert ist und das Verfahren folgende weitere Schritte aufweist:
- Tränken der Schaumstoff-Sperrschicht-Bahn (38) mit einem Imprägnat (48); und
- Trocknen der imprägnierten Schaumstoff-Sperrschicht-Bahn (38).

4. Verfahren nach Anspruch 3, **dadurch gekennzeichnet, dass** vor dem Schritt des Tränkens der Schaumstoff-Sperrschicht-Bahn (38) folgende Schritte durchgeführt werden:
- Aufwickeln der Schaumstoff-Sperrschicht-Bahn (38) zu einer Vorratsrolle (40); und
- Abwickeln der Schaumstoff-Sperrschicht-Bahn (38) von der Vorratsrolle (40).

5. Verfahren nach einem der vorangehenden Ansprüche, bezogen auf Alternative (ii), **dadurch gekennzeichnet, dass** das Durchtrennen der Zwischenrolle (50) mittels Sägen (60) durchgeführt wird.

6. Verfahren nach einem der vorangehenden Ansprüche, **dadurch gekennzeichnet, dass** das Einbringen jedes Folienstreifens (20) oder Klebebandstreifens in jeden Zwischenraum zwischen zwei benachbarten Schaumstoffstreifen (12) durch Abwickeln des Folienstreifens (20) oder Klebebandstreifens von einer Spule (22) oder Rolle und Umlenken des Folienstreifens (20) oder Klebebandstreifens mittels eines Umlenkelements (24) durchgeführt wird.

7. Verfahren nach einem der vorangehenden Ansprüche, **dadurch gekennzeichnet, dass** das Einbringen des flüssigen klebstoffartigen Mediums in jeden Zwischenraum mittels einer Düse (64) erfolgt.

8. Verfahren nach einem der vorangehenden Ansprüche, **dadurch gekennzeichnet, dass** das Verbinden der Schaumstoffstreifen (12) den Schritt aufweist, jeden Folienstreifen (20) mit den zwei an den Folienstreifen (20) angrenzenden Schaumstoffstreifen (12) durch Laminierung zu verbinden.

9. Verfahren nach einem der vorangehenden Ansprüche, **dadurch gekennzeichnet, dass** das Verbinden aller Schaumstoffstreifen (12) den Schritt aufweist, das flüssige klebstoffartige Medium in jedem Zwischenraum zu verfestigen.

10. Verfahren nach Anspruch 9, **dadurch gekennzeichnet, dass** das Verfestigen des flüssigen klebstoffartigen Mediums durch chemische oder physikalische Prozesse erfolgt.

11. Verfahren nach einem der vorangehenden Ansprüche, **dadurch gekennzeichnet, dass** das Verbinden aller Schaumstoffstreifen (12) den Schritt der Wärmeaufbringung umfasst.

12. Verfahren nach einem der vorangehenden Ansprüche, **dadurch gekennzeichnet, dass** das Einbringen jedes Schnitts (30, 68) in die Schaumstoffbahn (10) oder die Schaumstoff-Sperrschicht-Bahn (38) mittels eines Messers (34, 66) oder einer Säge durchgeführt wird.

13. Verfahren nach einem der vorangehenden Ansprüche, **dadurch gekennzeichnet, dass** jeder Schnitt (30) die Schaumstoffbahn (10) von oben nach unten komplett durchdringt.

## Claims

1. Method for producing sealing tape rolls (1) consisting of soft, compressed foam having at least one barrier layer (3) which extends in the radial direction and which is arranged axially between two layers (12) of the foam, comprising the following steps in the order specified:
- providing a foam web (10) consisting of a soft foam;
- making at least one cut (30) in the foam web (10) in a longitudinal direction of the foam web (10) to form foam strips (12) which extend in parallel;
- introducing a film strip (20), an adhesive tape strip and/or an adhesive-like liquid medium into each interspace between two adjacent foam strips (12) that is created by the at least one cut (30), and
- connecting all the foam strips (12) to produce a foam-barrier layer web (38) in which there alternate foam strips (12) and at least one barrier layer (3) which has resulted from the film strip (20), the adhesive tape strip and/or the adhesive-like liquid medium;
**characterized in that** one of the following steps follows the above-specified steps:
- (i) winding up the foam-barrier layer web (38) to form a sealing tape roll (1), or
- (ii) winding up the foam-barrier layer web (38) to form an intermediate roll (50) and severing the intermediate roll (50) at one or more points in the axial direction in order to create a plurality of sealing tape rolls (1) which are less wide than the intermediate roll (50), or
- (iii) making at least one cut (68) in the foam-barrier layer web (38) in a longitudinal direction of the foam-barrier layer web (38) to form foam-barrier layer strips (69) and winding up the foam-barrier layer strips (69) to form individual sealing tape rolls (1);
and **in that**
the connection of all the foam strips (12) comprises the step of pressing the foam strips (12) against one another.

2. Method according to Claim 1, **characterized in that** the step of providing the foam web (10) comprises the steps of providing a starting roll (5) having the wound-up foam web (10) and unwinding the foam web (10) from the starting roll (5).

3. Method according to Claim 1 or 2, **characterized in that** the foam web (10) is not impregnated and the method comprises the following further steps:
- impregnating the foam-barrier layer web (38) with an impregnating substance (48); and
- drying the impregnated foam-barrier layer web (38) .

4. Method according to Claim 3, **characterized in that** the following steps are carried out before the step of impregnating the foam-barrier layer web (38):
- winding up the foam-barrier layer web (38) to form a supply roll (40); and
- unwinding the foam-barrier layer web (38) from the supply roll (40).

5. Method according to one of the preceding claims, based on alternative (ii), **characterized in that** the intermediate roll (50) is severed by means of saws (60) .

6. Method according to one of the preceding claims, **characterized in that** each film strip (20) or adhesive tape strip is introduced into each interspace between two adjacent foam strips (12) by unwinding the film strip (20) or adhesive tape strip from a reel (22) or roll and deflecting the film strip (20) or adhesive tape strip by means of a deflection element (24).

7. Method according to one of the preceding claims, **characterized in that** the liquid adhesive-like medium is introduced into each interspace by means of a nozzle (64) .

8. Method according to one of the preceding claims, **characterized in that** the connection of the foam strips (12) comprises the step of connecting each film strip (20) to the two foam strips (12) adjoining the film strip (20) by lamination.

9. Method according to one of the preceding claims, **characterized in that** the connection of all the foam strips (12) comprises the step of curing the liquid adhesive-like medium in each interspace.

10. Method according to Claim 9, **characterized in that** the liquid adhesive-like medium is cured by chemical or physical processes.

11. Method according to one of the preceding claims, **characterized in that** the connection of all the foam strips (12) comprises the step of heat application.

12. Method according to one of the preceding claims, **characterized in that** each cut (30, 68) is made in the foam web (10) or the foam-barrier layer web (38) by means of a knife (34, 66) or a saw.

13. Method according to one of the preceding claims, **characterized in that** each cut (30) completely penetrates the foam web (10) from top to bottom.

## Revendications

1. Procédé de fabrication de rouleaux de ruban étanche (1) en mousse comprimée souple, comprenant au moins une couche de blocage (3), s'étendant en direction radiale, qui est disposée axialement entre deux couches (12) de la mousse, comportant les étapes suivantes dans l'ordre indiqué :
- mettre à disposition une nappe de mousse (10) en une mousse souple ;
- ménager au moins une entaille (30) dans la nappe de mousse (10) dans une direction longitudinale de la nappe de mousse (10) pour former des bandes de mousse (12) s'étendant parallèlement ;
- mettre en place une bande de film (20), une bande de ruban adhésif et/ou un milieu fluide du type colle dans chaque espace intermédiaire, produit par la ou chaque entaille (30), situé entre deux bandes de mousse (12) voisines et
- réunir toutes les bandes de mousse (12) pour produire une nappe mousse-couche de blocage (38) dans laquelle alternent des bandes de mousse (12) et au moins une couche de blocage (3) qui provient de la bande de film (20), de la bande de ruban adhésif et/ou du milieu fluide du type colle ;
**caractérisé en ce que** l'une des étapes suivantes suit les étapes indiquées précédemment :
(i) enrouler la nappe mousse-couche de blocage (38) en un rouleau de ruban étanche (1), ou
(ii) enrouler la nappe mousse-couche de blocage (38) en un rouleau intermédiaire (50) et découper le rouleau intermédiaire (50) en un ou en plusieurs emplacements en direction axiale, pour produire de multiples rouleaux de ruban étanche (1) qui sont moins larges que le rouleau intermédiaire (50), ou
(iii) ménager au moins une entaille (68) dans la nappe mousse-couche de blocage (38) dans une direction longitudinale de la nappe mousse-couche de blocage (38) pour la formation de bandes mousse-couche de blocage (69) et enrouler les bandes mousse-couche de blocage (69) en rouleaux de ruban étanche (1) individuels ;
et **en ce que**
la réunion de toutes les bandes de mousse (12) comporte l'étape consistant à presser les bandes de mousse (12) l'une contre l'autre.

2. Procédé suivant la revendication 1, **caractérisé en ce que** l'étape de mise à disposition de la nappe de mousse (10) comporte les étapes consistant à mettre à disposition un rouleau initial (5) comprenant la nappe de mousse (10) enroulée et à dérouler du rouleau initial (5) la nappe de mousse (10).

3. Procédé suivant la revendication 1 ou 2, **caractérisé en ce que** la nappe de mousse (10) n'est pas imprégnée et le procédé comporte d'autres étapes suivantes :
- imprégner d'un produit d'imprégnation (48) la nappe mousse-couche de blocage (38) ; et
- sécher la nappe mousse-couche de blocage (38) imprégnée.

4. Procédé suivant la revendication 3, **caractérisé en ce que** des étapes suivantes sont exécutées avant l'étape de l'imprégnation de la nappe mousse-couche de blocage (38) :
- enrouler la nappe mousse-couche de blocage (38) en un rouleau de stockage (40) ; et
- dérouler du rouleau de stockage (40) la nappe mousse-couche de blocage (38).

5. Procédé suivant l'une des revendications précédentes, se référant à la variante (ii), **caractérisé en ce que** le découpage du rouleau intermédiaire (50) est effectué au moyen de scies (60).

6. Procédé suivant l'une des revendications précédentes, **caractérisé en ce que** la mise en place de chaque bande de film (20) ou bandes de ruban adhésif dans chaque espace intermédiaire situé entre deux bandes de mousse (12) voisines est effectué par déroulement de la bande de film (20) ou bande de ruban adhésif à partir d'une bobine (22) ou rouleau et par changement de direction de la bande de film (20) ou bande de ruban adhésif au moyen d'un élément de changement de direction (24).

7. Procédé suivant l'une des revendications précédentes, **caractérisé en ce que** la mise en place du milieu fluide du type colle dans chaque espace intermédiaire a lieu au moyen d'une buse (64).

8. Procédé suivant l'une des revendications précédentes, **caractérisé en ce que** la réunion des bandes de mousse (12) comporte l'étape consistant à réunir par application couche sur couche de chaque bande de film (20) avec les deux bandes de mousse (12) adjacentes à la bande de film (20).

9. Procédé suivant l'une des revendications précédentes, **caractérisé en ce que** la réunion de toutes les bandes de mousse (12) comporte l'étape consistant à faire durcir dans chaque espace intermédiaire le milieu fluide du type colle.

10. Procédé suivant la revendication 9, **caractérisé en ce que** le durcissement du milieu fluide du type colle a lieu par des processus chimiques ou physiques.

11. Procédé suivant l'une des revendications précédentes, **caractérisé en ce que** la réunion de toutes les bandes de mousse (12) comporte l'étape d'apport de chaleur.

12. Procédé suivant l'une des revendications précédentes, **caractérisé en ce que** l'opération consistant à ménager chaque entaille (30, 68) dans la nappe de mousse (10) ou la nappe mousse-couche de blocage (38) est effectuée au moyen d'un couteau (34, 66) ou d'une scie.

13. Procédé suivant l'une des revendications précédentes, **caractérisé en ce que** chaque entaille (30) traverse complètement de haut en bas la nappe de mousse (10).
